Europäisches Patentamt

European Patent Office

Office européen des brevets

(11) Numéro de publication: **0 375 577**
**A1**

## (12) DEMANDE DE BREVET EUROPEEN

(21) Numéro de dépôt: 89420515.2

(51) Int. Cl.5: **F16L 47/06**

(22) Date de dépôt: 22.12.89

(30) Priorité: 23.12.88 FR 8817623

(43) Date de publication de la demande:
27.06.90 Bulletin 90/26

(84) Etats contractants désignés:
AT BE CH DE ES FR GB GR IT LI NL SE

(71) Demandeur: GERLAND
50, cours de la République
F-69100 Villeurbanne(FR)

(72) Inventeur: Wiart, Jean-Loup
2 Place de la Gare
F-69003 Lyon(FR)

(74) Mandataire: Guerre, Dominique et al
Cabinet Germain et Maureau Le
Britannia-Tour C 20 Boulevard Eugéne
Dérnelle BP 3011
F-69392 Lyon Cédex 03(FR)

(54) Joint d'étanchéité pour canalisation, notamment en béton et tuyau pourvu d'un tel joint.

(57) La présente invention a pour objet un joint d'étanchéité (1) annulaire pour canalisations notamment en béton du type destiné à être rapporté à l'intérieur de l'about femelle (2) d'un tuyau sur sa portée cylindrique (4), et constitué par un anneau (3) en élastomère naturel ou synthétique dont le diamètre extérieur D est superieur à celui de la portée cylindrique (4) de l'about femelle (2) et dans lequel est implantée une âme (6) rigide et flexible formant un arc de cercle de longueur inférieure à la circonférence de la lumière intérieure (5) de sorte que cette dernière ait une région vide (7) en arc de cercle non occupée par l'âme (6) rigide et flexible, au niveau de laquelle l'anneau (3) reste de nature plus déformable et est susceptible d'être infléchi en direction centripète de manière à former un renfoncement (13) permettant l'introduction de l'anneau (3) dans l'about femelle (2) puis son extension élastique et son plaquage contre la portée cylindrique (4) lorqu'on lui applique une pression en direction centrifuge.

Application au raccordement de tuyaux en béton ou autre.

FIG.3

## JOINT D'ETANCHEITE POUR CANALISATION, NOTAMMENT EN BETON, ET TUYAU POURVU D'UN TEL JOINT

La présente invention a d'abord pour objet un joint d'étanchéité pour canalisations, notamment en béton, utilisées pour le drainage des eaux usées, pluviales ou autres, ou pour l'adduction des eaux potables.

Ces canalisations sont généralement constituées par des tuyaux cylindriques en béton ou similaire dont chacun présente, à ses deux extrémités, respectivement un about mâle et un about femelle ou collet. L'assemblage de ces tuyaux en béton est réalisé par emboîtement de l'about mâle d'un tuyau dans l'about femelle du tuyau adjacent. A chaque zone de raccordement entre deux tuyaux contigus, l'étanchéité est obtenue par utilisation d'un joint annulaire, généralement réalisé à partir d'un matériau élastomère naturel ou synthétique.

Les joints constituent les parties critiques dans les canalisations. Le plus souvent, c'est aux joints que se manifestent les désordres dans tes conduites, posées en terre principalement, à la suite de fuites, mêmes légères, qui affouillent le sol et risquent ainsi de fragiliser, voire même de supprimer le support de la conduite. En outre, les exigences d'hygiène et de protection de l'environnement imposent l'utilisation de joints fiables pour l'assemblage des tuyaux.

Ces joints sont classés en deux catégories, selon que le joint est placé, soit sur l'about mâle, soit sur l'about femelle, dénommé également about collet.

Conformément au document GB-A-2 016 630, on a décrit un joint d'étanchéité adapté à l'assemblage de tuyaux en matière plastique, comprenant d'un côté un about mâle droit, et de l'autre côté un about femelle comportant un bossage extérieur formant en creux un logement annulaire pour le joint. Ce dernier est disposé et rapporté dans le logement annulaire, de telle manière que sa partie intérieure est située dans le prolongement et au contact de l'about male du tuyau voisin assemblé.

Conformément à l'un des modes d'exécution décrits par le document GB-A-2 016 630, le joint d'étanchéité est constitué par un anneau en matériau élastomère, formé de deux parties formant entre elles une fente circulaire ouverte, à savoir une semelle plaquée par l'extérieur sur une partie droite du logement annulaire, et une lèvre oblique d'étanchéité pour l'about mâle du tuyau voisin assemblé. Dans la fente circulaire, une âme rigide et flexible est implantée ou insérée cette âme forme un arc de cercle représentant la quasi-totalité de l'anneau, mais néanmoins, un interstice est ménagé entre les deux extrémités de cette âme, lequel est occupé par le matériau élastomère.

La mise en place d'un tel joint dans le logement annulaire d'un about femelle s'effectue de la manière suivante :

- en pressant le joint libre en direction centripète, l'anneau s'infléchit vers le centre de la circonférence pour affecter schématiquement la forme d'un coeur, les deux extrémités de l'âme rigide demeurant liées par un talon de matériau élastomère de cette manière, le diamètre apparent extérieur du joint se trouve réduit

- le joint dans cette conformation est alors introduit dans l'about femelle, au niveau du logement en creux, et disposé dans un plan orthogonal à l'axe du tuyau, en vis-à-vis de la partie droite du logement

- par clipsage, c'est-à-dire élastiquement par simple pression, et relâchement en rappel en direction centrifuge, la partie extérieure du joint vient se plaquer contre la portée droite du logement en creux ; l'âme rigide élastique vient compléter l'étanchéité vers l'extérieur, en comprimant sur sa circonférence incomplète le matériau élastomère, contre la portée droite du logement en creux.

Un tel joint d'étanchéité présente les inconvénients suivants.

Un tel joint est conçu pour être disposé dans un logement complémentaire en creux, le maintenant de manière étroite dans un plan prédéterminé orthogonal à l'axe du tuyau, notamment au moment de l'assemblage ou emboîtement avec un about mâle d'un tuyau voisin. Un tel joint ne peut par lui-même assurer un tel maintien, la compression centrifuge exercée par l'âme rigide étant a cet égard insuffisante. Ce joint ne peut par conséquent être utilisé directement sur la portée intérieure droite d'un about femelle ou collet.

L'âme rigide et flexible est placée à l'intérieur d'une rainure ou fente ouverte, ce qui n'a aucune importance lorsque le joint est disposé, et en quelque sorte escamoté dans un logement annulaire en creux, mais ce qui est rédhibitoire pour un joint clipsé directement sur la portée droite et intérieure d'un about femelle. Dans ce dernier cas, aussi bien pendant la mise en place du joint, que pendant l'emboîtement de deux tuyaux, l'âme rigide et flexible peut s'échapper de son logement, en laissant au joint la possibilité de se déplacer ou de se déformer locale ment, avec toutes les conséquences dommageables auxquelles on peut s'attendre en ce qui concerne l'étanchéité de l'assemblage des tuyaux emboîtés.

Ce joint est en fait conçu et adapté pour des tuyaux ou logements, ayant des tolérances de réalisation ou fabrication relativement étroites, ce que permet par exemple l'extrusion de tubés plastiques. Il est par contre totalement inadapté à des tuyaux ou canalisations en béton, dont les tolérances de réalisation peuvent être relativement importantes, en raison de l'usure par abrasion des moules de fabrication. En particulier, lorsque les dimensions du joint excèdent celles de l'about, compte-tenu de la nature incompressible du matériau élastomère, la configuration choisie ne permet pas d'absorber sous contrainte les excès dimensionnels ou de matière du joint ; il en résulte une mise en place particulièrement difficile, voire impossible, y compris avec un lubrifiant pour réduire les forces de frottement entre l'anneau de joint et la portée cylindrique du collet.

Le document US-C-3 804 439 montre également un joint d'étanchéité renforcé par une âme métallique ou rigide, sous la forme d'un arc de cercle dont les extrémités libres ménagent un espace rempli par le matériau élastomère du joint. Cette disposition n'a d'autre but que de pouvoir ramasser le joint sur lui-même, par une déformation aléatoire, de manière à l'introduire dans une enveloppe métallique, à laquelle il est destiné.

La présente invention a pour objet de remédier aux inconvénients précédents. Elle a pour objet un joint plus particulièrement adapté, quoique non exclusivement adapté aux canalisations en béton, ce joint pouvant être solidarisé et maintenu directement, c'est-à-dire sans moyens complémentaires tels qu'un logement approprié, sur la portée droite de l'about femelle d'un tuyau. La présente invention a également pour objet un joint susceptible de compenser ou "encaisser" des écarts dimensionnels relativement importants entre les abouts des deux tuyaux emboîtés l'un dans l'autre.

Selon la présente invention, l'anneau du joint comporte une lumière intérieure fermée, s'étendant sur toute la longueur ou circonférence dudit anneau, et ayant par conséquent une forme circulaire lorsque le joint est mis en place. L'âme rigide et flexible, ayant comme précédem ment au moins une section en arc de cercle et ménageant par conséquent au moins un interstice, est logée librement à l'intérieur de la lumière, de telle manière que deux extrémités voisines de l'âme rigide et flexible sont libres de se rapprocher ou de s'éloigner, en coulissant à l'intérieur de la lumière circulaire, lorsque le joint est soumis à une déformation quelconque. Chaque partie de la lumière fermée, en correspondance avec un interstice de l'âme rigide, est vide de tout matériau élastomère, et forme ainsi une zone de compensation à la déformation sous contrainte du joint.

Plus particulièrement, la circonférence de l'anneau hors contrainte, c'est-à-dire relâché librement en direction centrifuge, excède la circonférence intérieure de la portée cylindrique de l'about femelle de destination du joint.

Préférentiellement, chaque zone de compensation, telle que définie ci-dessus, présente une extension en arc de cercle, au niveau de laquelle l'anneau est plus déformable ; cette extension est suffisante pour permettre dans la seule zone de compensation, ou les seules zones de compensation, d'abord une inflexion en direction centripète selon un renfoncement, en réduisant le diamètre de l'anneau à une valeur inférieure, puis une déformation en sens inverse par "clipsage", c'est-à-dire élastiquement par simple pression et relâchement de la zone de compensation en direction centrifuge, en augmentant le diamètre de l'anneau à une valeur supérieure.

L'expression "clipsage" n'est pas reconnue dans le langage officiel, mais traduit bien une notion de blocage par relâchement d'un mécanisme avec effet ressort.

Un joint d'étanchéité présentant l'ensemble des caractéristiques techniques précitées peut être mis en place dans l'about femelle d'un tuyau, et plus précisément sur la portée droite d'un tel about, de la manière suivante :

- par l'inflexion centripète des zones de déformation, la circonférence extérieure de l'anneau ou joint se trouve réduite à une valeur inférieure à la circonférence intérieure et nominale de l'about femelle ; le joint dans cette conformation peut alors être introduit dans l'about femelle, sans frottement et donc sans difficulté particulière

- par relâchement élastique centrifuge, le joint se plaque contre la portée intérieure de l'about femelle, et alors deux phénomènes favo rables au maintien et à l'étanchéité du joint se passent en même temps ; d'abord, la circonférence extérieure du joint étant plus importante que la circonférence nominale de l'about, l'anneau est contraint, et l'excès du matériau élastomère se déplace vers la ou les zones de compensation ; ensuite, les zones de compensation s'obturant, le matériau élastomère entre deux extrémités adjacentes de l'âme flexible et rigide s'expanse, pour repousser et éloigner l'une de l'autre lesdites extrémités ; l'âme est alors également contrainte sur sa circonférence, en comprimant un peu plus le matériau élastomère extérieur contre la portée intérieure de l'about.

Conformément à un mode préféré de réalisation de l'invention, l'anneau se présente sous la forme d'un profilé réalisé à partir d'un matériau élastique en caoutchouc ou en élastomère de synthese, comprenant une semelle destinée à être appliquée contre la portée cylindrique de l'about femelle du tuyau, et au moins une lèvre prévue pour coopérer avec l'about mâle d'un autre tuyau, pour assurer l'étanchéité du raccordement entre ces deux tuyaux.

Cette semelle est soit lisse, soit munie de stries ou de rainures aptes à la rendre antidérapante.

Avantageusement, l'âme rigide et flexible se présente sous la forme d'une ou de plusieurs lamelles de forme parallélipédique superposées. Ces lamelles parallélipédiques superposées peuvent avoir des modules de flexion semblables ou différents, et peuvent être réalisées dans des matériaux identiques ou non.

Le matériau de constitution de cette âme rigide et flexible est de préférence un thermoplastique synthétique, dont le module de flexion est au moins égal à 500 Mégapascal (MPA) et de préférence à 2000 MPA tel que le polychlorure de vinyle.

Dans une première variante de réalisation du joint d'étanchéité, l'âme rigide et flexible logée dans la lumière intérieure est constituée par une seule section en arc de cercle.

Dans une seconde variante de réalisation du joint d'étanchéité, l'âme rigide et flexible est séparée en deux sections, délimitant entre elles, dans la même lumière fermée, deux zones de compensation. Préférentiellement, ces deux zones de compensation sont symétriques par rapport au centre de l'anneau, et ont sensiblement la même longueur. L'une des zones de compensation est occupée par un matériau élastiquement compressible, par exemple par une cale d'une mousse plastique.

La présence de ces deux sections souples, donc de ces deux zones de "clipsage" sur l'about, améliore encore les performances et notamment la tenue du joint à l'intérieur de l'about femelle.

Afin de faciliter et de rendre peu onéreuse sa fabrication, le joint d'étanchéité selon l'invention est obtenu de la façon suivante : l'anneau est, tout d'abord, réalisé par extrusion sous la forme d'une bande présentant la lumière intérieure dans laquelle la ou les sections de l'âme rigide et flexible est sont enfilées et mises en position ; on procède ensuite à la mise en forme circulaire de l'anneau, puis à la fixation l'une à l'autre de ses deux extrémités par collage, soudage ou similaire. Cette fabrication par extrusion, économique et aisée à mettre en oeuvre, est possible du fait de la conformation géométrique relativement simple de la bande. Elle ne comporte, en effet, pas de fentes.

Lorsque le joint comporte deux sections de l'âme rigide et flexible, leur mise en position dans la lumière intérieure, l'une par rapport à l'autre, est réalisée à l'aide d'une cale réalisée à partir d'un matériau élastique et compressible du type cellulaire, cette cale étant enfilée dans la lumière intérieure entre les deux sections rigides et flexibles, et ayant une longueur égale à celle d'une région vide ou zone de compensation. Après introduction de ce joint dans l'about femelle et "clipsage" des deux zones de compensation opposées, la cale, qui peut être par exemple en mousse de polystyrène expansé, se comprime sous l'effet des efforts exercés par l'anneau en élastomère sous tension, de sorte que les extrémités libres de l'âme prennent appui sur la matière déformable qui a un effet ressort du fait de ces propriétés de résilience.

De toute façon, l'invention sera mieux comprise et ses avantages ressortiront bien à la lumière de la description qui suit, à titre non limitatif, de deux exemples de réalisation du joint d'étanchéité annulaire, en référence au dessin annexé dans lequel :

Figure 1 en est une vue de face suivant un premier mode de réalisation;

Figure 2 en est une vue partielle en perspective cavalière,

Figure 3 est une vue en coupe diamétrale du joint de figure 1, une fois introduit dans l'about femelle d'un tuyau avant "clipsage" ;

Figure 4 est une vue en coupe diamétrale similaire à figure 3 , après "clipsage" du joint dans l'about femelle ;

Figure 5 est une vue en coupe suivant la ligne V-V de figure 4,

Figure 6 est une vue en coupe suivant la ligne VI-VI de figure 4 ;

Figure 7 en est une vue en coupe diamétrale du joint d'étanchéité suivant un deuxième mode de réalisation, une fois introduit dans l'about femelle d'un tuyau avant "clipsage".

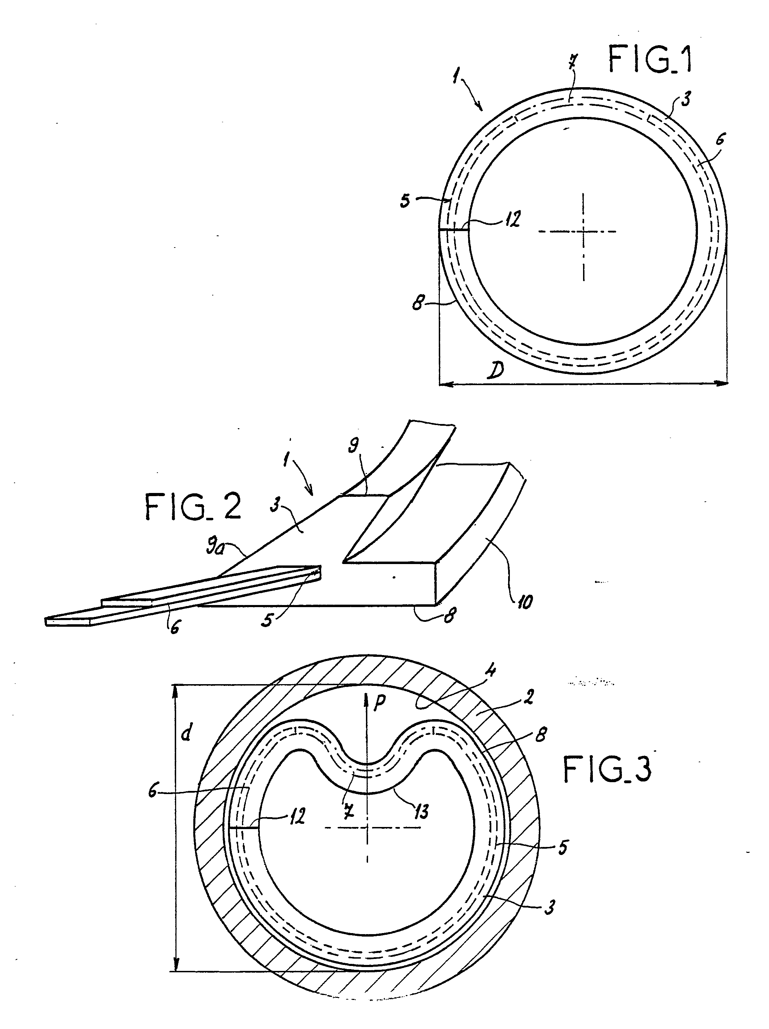

Les figures 1 à 6 montrent une première forme de réalisation d'un joint d'étanchéité annulaire **1** pour canalisations en béton, destiné à être rapporté à l'intérieur de l'about femelle **2** d'un tuyau.

Ce joint **1** est constitué par un anneau **3** réalisé à partir d'un matériau élastomère naturel tel que le caoutchouc classiquement employé dans ce type d'application, ou synthétique. Avant utilisation (Figure 1), cet anneau **3** possède un diamètre extérieur (D) hors contrainte, supérieur au diamètre intérieur (d) nominal de la portée cylindrique **4** de l'about femelle **2** du tuyau (figure 3).

A l'intérieur de cet anneau **3** en caoutchouc est ménagée une lumière intérieure fermée **5**, s'étendant sur toute la circonférence de l'anneau **3**, et servant de logement à une âme **6** circonférentiellement rigide et diamétralement flexible , disposée librement dans la lumière (5). Cette âme forme un arc de cercle de longueur inférieure à la circonférence de la lumière intérieure 5, de sorte que cette dernière présente, comme montré aux figures 1 et 3, une région vide ou zone de compensation **7**, vidée de tout matériau en arc de cercle,au niveau de laquelle l'anneau **3** en caoutchouc conserve ses propriétés naturelles de déformabilité et d'élasticité.

Ainsi qu'il ressort de la figure **2**, cet anneau **3** en caoutchouc est un profilé réalisé par extrusion, qui comporte essentiellement une face périphérique externe **8** dénommée semelle et une lèvre d'étanchéité **9**. Cette semelle **8** est destinée à être appliquée contre la portée cylindrique **4** de l'about femelle **2**. Elle peut être lisse comme représenté sur le dessin, mais peut egalement être munie de stries ou rainures prévues pour la rendre antidérapante. La lèvre d'étanchéité **9** fait un angle d'environ 33° avec la semelle **8**, et sa plus grande face inclinée **9a** est, bien entendu, destinée à être en regard de l'ouverture de l'about femelle **2** recevant l'about mâle d'un autre tuyau. Cette lèvre d'étanchéité **9** est conformée de telle sorte qu'elle puisse subir un taux d'écrasement de 48 %, lors de l'engagement de l'about mâle d'un autre tuyau dans cet about femelle **2**, et assurer ainsi de façon parfaite l'étanchéité du raccordement entre deux tuyaux.

Cet anneau profilé **3** présente éventuellement un talon de butée **10** destiné à être tourné vers l'intérieur du tuyau, une fois le joint **1** en place dans l'about femelle **2**, et prévu pour prendre appui contre un épaulement **11** de l'about femelle **2**.

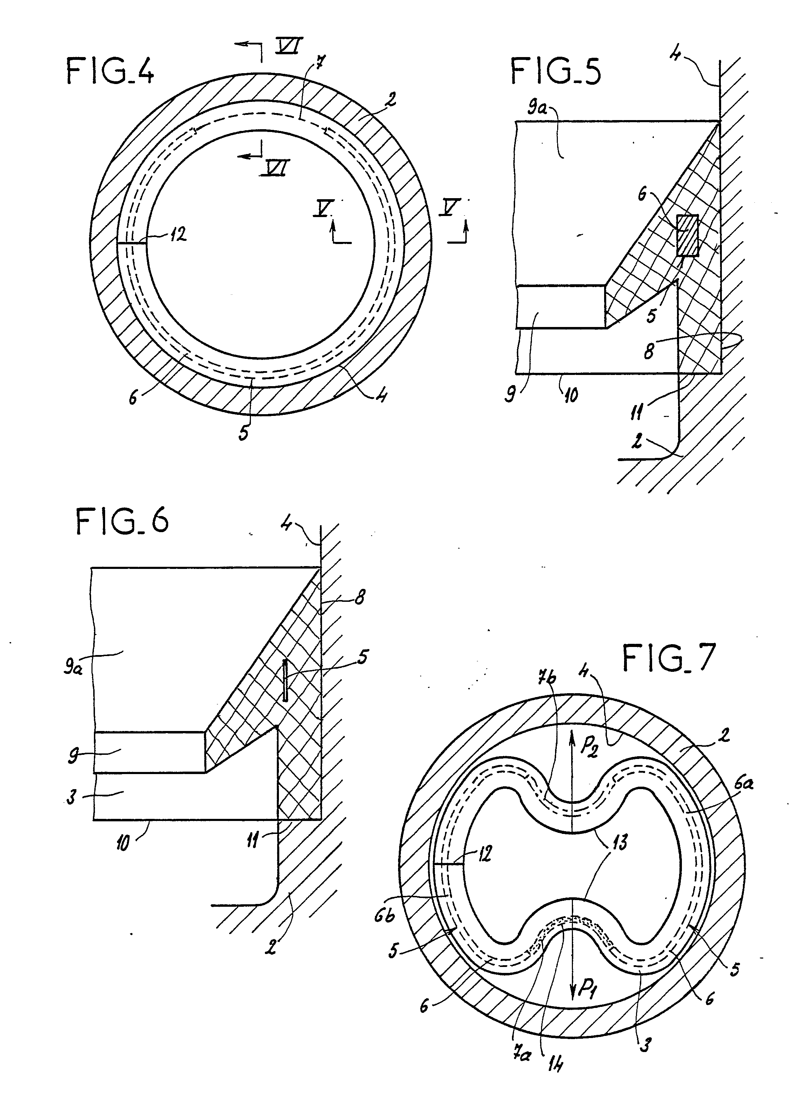

L'âme **6** rigide et flexible peut être de forme quelconque, mais, de préférence, elle est constituée par une seule lamelle parallélépipédique comme il apparaît sur la figure 5 ou par au moins deux lamelles parallélépipédiques superposées, comme il apparaît sur la figure 2. Ces lamelles rigides et flexibles sont réalisées en tout matériau connu approprié dont le module de flexion est au moins égal à 500 Mégapascal (MPA) et de préférence à 2 000 MPA, tel qu'un métal, une matière thermoplastique synthétique comme par exemple le polychlorure de vinyle, les thermoplastiques styréniques, les polyacryliques, les polyacétals, les polyamides, le polycarbonate, le polysulfure de phénylène, le polyphénylène oxydé, ou bien encore les thermoplastiques renforcés avec de la fibre de verre.

Dans le cas où l'âme **6** rigide et flexible est formée par plusieurs lamelles superposées, celles-ci peuvent être en matériau de nature différente et/ou avoir des modules de flexion identiques ou non.

Le joint d'étanchéité **1** est obtenu de façon tout à fait avantageuse par extrusion d'une bande en caoutchouc présentant la lumière intérieure fermée **5**, à l'intérieur de laquelle l'âme rigide et flexible est enfilée et mise en position. On procède ensuite à la mise en forme circulaire de l'anneau **3**, puis à la fixation l'une à l'autre de ses extrémités par collage, soudure ou similaire. La ligne de jonction entre ces dernières apparaissant sur le dessin est désignée par la référence **12**.

Concernant le mode d'utilisation du joint d'étanchéité annulaire rapporté conforme à l'invention, un exemple va être donné ci-après :

Pour un diamètre de 380 mm de l'about femelle **2** du tuyau, on confectionne un joint d'étanchéité annulaire **1**, dont le diamètre et la circonférence de la semelle **8** destinée à venir en contact de la portée cylindrique **4** en béton sont respectivement 390 mm et 1 225 mm, ce qui représente un excès dimensionnel de 2,6 % par rapport à l'about femelle.

L'âme **6** rigide et flexible parallélépipédique est en polychlorure de vinyle, et présente une largeur de 6 mm, une hauteur de 3 mm et une longueur de 1 166 mm. Elle est plus courte que la lumière intérieure fermée **5**, ayant une circonférence de 1 213 mm.

La valeur angulaire de l'arc de cercle formé par l'âme **6**, avant le montage ou clipsage du joint dans l'about femelle, est de 346°, tandis que celle de l'arc de cercle formé par la région vide ou zone de compensation **7** est de 14°. Sur ce secteur de 14°, qui présente la consistance souple et déformable de la matière caoutchouc ou élastomère, l'anneau **3** peut être infléchi en direction centripète, de manière à former un renfoncement **13** (figure 3) pour réduire le diamètre D de l'anneau **3** à une valeur inférieure à celle du diamètre d de la portée cylindrique **4** de l'about femelle **2**, et ainsi permettre une introduction aisée de cet anneau **3** à l'intérieur de l'about femelle **2**.

Pour fixer à demeure le joint **1**, il suffit d'appliquer sur le renfoncement **13** une pression P (Figure 3) de direction centrifuge, de façon à ce que l'anneau **3** se déforme à nouveau élastiquement dans cette direction, et vienne se plaquer par l'intermédiaire de sa semelle **8** sur toute la portée cylindrique **4**. Ce phénomène de blocage par relâchement et contrainte élastique est connu sous la dénomination commune de "clipsage".

La partie de l'anneau **3** correspondant à la région vide ou zone de compensation **7** de la lumière intérieure **6** est alors comprimée entre les deux extrémités libres de l'âme rigide et flexible **6** qui ne sont plus séparées que par un secteur angulaire de 5°, tandis que l'arc de cercle formé par cette âme **6**, est de 355°. Les tensions appliquées à la matière élastomère de cette partie de l'anneau **3** ont pour effet de la comprimer circonférentiellement, mais aussi radialement de sorte que la zone de compensation de la lumière intérieure soit obturée. Les extrémités libres de l'âme rigide et flexible **6** peuvent prendre appui de façon élastique sur cette partie de l'anneau **3**, comme il apparaît sur la figure 4.

Un tel joint d'étanchéité **1** est économique, adaptable sur tout type de tuyau en béton, et facile à monter. En outre, sa conception lui permet d'être fixé de façon stable et fiable à l'intérieur de l'about femelle, de manière à assurer une étanchéité parfaite du raccordement entre tuyaux.

Cette garantie selon laquelle le joint **1** de l'invention n'est absolument pas susceptible d'être déplacé permet d'éviter le recours à des tuyaux en béton dont l'about femelle comporte un épaulement de positionnement du joint.

Un test consistant à projeter un liquide sous une pression de trois bars dans deux tuyaux emboîtés l'un dans l'autre, équipés du joint 1 de l'invention, et dont les axes respectifs sont décalés angulairement l'un par rapport à l'autre de 3°, a d'ailleurs montré que ce joint a un comportement tout à fait performant, et qu'il supprime tout risque de fuites au niveau du raccordement.

La figure 7 montre un deuxième mode de réalisation de l'invention. Dans cette figure, les mêmes éléments seront désignés par les mêmes références que précédemment.

Le joint d'étanchéité annulaire 1 est constitué par un anneau 3 en élastomère semblable à celui représenté à la figure 2, mais comportant deux sections 6a et 6b rigides et flexibles logées dans la même lumière intérieure 5.

Ces deux sections, qui ont toutes les caractéristiques et les variantes de l'âme 6 décrite ci-avant pour le premier mode de réalisation, sont sensiblement de même longueur et sont disposées symétriquement par rapport au centre de l'anneau 3. Elles sont séparées l'une de l'autre par deux régions vides ou zones de compensation 7a et 7b de la lumière intérieure 5, en forme d'arc de cercle et diamétralement opposées, au niveau de chacune d'elles l'anneau 3 en caoutchouc conserve ses propriétés de déformabilité et d'élasticité.

La mise en position dans la lumière intérieure 5 de ces deux sections rigides et flexibles est réalisée à l'aide d'une cale 14 élastique et compressible en matériau cellulaire du type polystyrène expansé.

Cette cale 14 ayant une longueur égale à celle d'une zone de compensation 7, est enfilée dans la lumière intérieure de l'anneau profilé obtenu par extrusion entre les deux sections rigides et flexibles 6a et 6b. L'anneau 3 est ensuite mis en forme circulaire et ses deux extrémités sont fixées l'une à l'autre par collage, ou autre, suivant la ligne de jonction 12.

A titre non limitatif, un exemple d'utilisation du joint 1 conforme au deuxième mode de réalisation va être décrit ci-après :

La semelle 8 de ce joint 1 destiné à être rapporté à l'intérieur de l'about femelle 2 d'un tuyau, a un diamètre et une circonférence respectivement égaux à 1 057 mm et 3 320 mm, ce qui représente un excès dimensionnel de 2,8 par rapport à l'about femelle 2, qui a un diamètre de 1 028 mm et une circonférence de 3 230 mm. Le diamètre moyen et la circonférence de la lumière intérieure 5 de l'anneau 3 sont respectivement de 1 051 mm et 3 302 mm.

Chaque section rigide et flexible 6a et 6b est une lamelle en polychlorure de vinyle d'une largeur de 10 mm, d'une hauteur de 5 mm, et d'une longueur de 1 570 mm, tandis que la cale 14, de même section, a une longueur de 81 mm. Les arcs de cercle formés par chacune des deux sections 6a et 6b ont une même valeur angulaire de 171°, alors que celle des deux régions vides ou zones de compensation 7a et 7b dont l'une est remplie par la cale 14 est de 9°.

Pour introduire le joint 1 dans l'about 2, on déforme l'anneau 3 au niveau des deux zones de compensation 7a et 7b, de manière à former deux renfoncements réduisant son diamètre. On exerce ensuite une pression P₁, P₂ centrifuge sur chacun des renfoncements 13 pour "clipser" l'anneau 3 et entraîner le plaquage de sa semelle 8 contre la portée cylindrique 4. La cale 14 ainsi que la région vide 7 qui lui est diamétralement opposée sont soumises à une compression importante, due à la tension qui résulte de la déformation élastique de l'anneau 3.

Le secteur angulaire occupé par chacune des sections 6a et 6b a augmenté, et est passé de 171° à 176°, tandis que celui occupé par chacune des régions vides ou zones de compensation 7a et 7b a diminué et est passé de 9° à 4°.

## Revendications

1 - Joint d'étanchéité (1) annulaire pour canalisations, destiné à être rapporté à l'intérieur d'un about femelle (2) d'un tuyau, constitué par un anneau (3) en matériau élastomère, dans lequel est implanté une âme (6) rigide et flexible, formant au moins un arc de cercle de longueur inférieure à la circonférence de l'anneau, et délimitant de ce fait au moins un interstice (7) entre deux extrémités ou deux sections, caractérisé en ce que l'anneau (3) comporte une lumière (5) intérieure fermée, s'étendant sur toute la circonférence de l'anneau, l'âme (6) rigide et flexible est logée librement à l'intérieur de la lumière, et chaque partie (7) de la lumière fermée, en correspondance avec un interstice de l'âme rigide, est vide de tout matériau élastomère, et forme une zone de compensation à la déformation sous contrainte dudit joint.

2 - Joint selon la revendication 1, caractérisé en ce que chaque zone de compensation (7) de la lumière (5) fermée est occupée par un matériau élastiquement compressible, par exemple par une cale d'une mousse plastique.

3 - Joint selon la revendication 1, caractérisé en ce que chaque zone de compensation (7) de la lumière (5) fermée est vide de tout matériau.

4 - Joint selon la revendication 1, caractérisé en ce que chaque zone de compensation (7) présente une extension en arc de cercle au niveau de laquelle l'anneau (3) est plus déformable, cette extension étant suffisante pour permettre dans seule zone de compensation, d'abord une inflexion en direction centripète selon un renfoncement (13), en réduisant le diamètre de l'anneau a une valeur inférieure, puis une déformation au sens inverse par "clipsage", c'est-à-dire élastiquement par simple pression et relâchement en direction centrifuge, en augmentant le diamètre de l'anneau à une valeur supérieure.

5 - Joint selon la revendication 1, caractérisé en ce que l'âme (6) rigide et flexible est constituée par plusieurs lamelles superposées.

6 - Joint selon la revendication 1, caracterisé en ce que le matériau à partir duquel est réalisé l'âme (6) rigide et flexible est un thermoplastique synthétique, dont le module de flexion est au moins égal à 500 Megapascal (MPA), et de préférence àgal à 2000 MPA.

7 - Joint d'étanchéité selon la revendication 6, caractérisé en ce que le matériau thermo-plastique est choisi dans le groupe comprenant le polychlorure de vinyle, les thermo-plastiques styréniques, les polyacryliques, les polyacétals, les polyamides, le polycarbonate, le polysulfure de phénylène, le polyphénylène oxydé, les thermo-plastiques renforcés avec de la fibre de verre.

8 - Joint selon la revendication 4, caractérisé en ce que la circonférence de l'anneau (3) hors contrainte, c'est-à-dire relâché librement en direction centrifuge, excède la circonférence intérieure de la portée cylindrique (4) de l'about femelle (2), dans lequel ledit joint doit être rapporté.

9 - Joint selon la revendication 8, caractérisé en ce que la valeur angulaire de la zone de compensation hors contrainte, c'est-à-dire relâchée librement en direction centrifuge, excède la valeur angulaire de la même zone sous contrainte, c'est-à-dire relâchée pour clipsage contre la portée cylindrique (4) de l'about femelle (2) dans lequel ledit joint doit être rapporté.

10 - Joint selon la revendication 1, caractérisé en ce que l'âme (6) rigide et flexible est séparée en deux sections , délimitant entre elles, dans la même lumière fermée, deux zones de compensation.

11 - Joint selon la revendication 10, caractérisé en ce que les deux zones de compensation sont symétriques par rapport au centre de l'anneau, et ont sensiblement la même longueur.

12 - Tuyau présentant à une extrémité un about femelle ou collet, définissant une portée cylindrique intérieure, sur laquelle est plaqué sous contrainte, un joint d'étanchéité conforme à l'une quelconque des revendications 1 à 11.

FIG.1

FIG.2

FIG.3

FIG.4

FIG.5

FIG.6

FIG.7

Office européen
des brevets

RAPPORT DE RECHERCHE EUROPEENNE

Numero de la demande

EP 89 42 0515

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A,D | US-A-3 804 439 (MARSH)<br>* Colonne 3, lignes 61-67; fig. 3 *<br>--- | 1 | F 16 L 47/06 |
| A,D | GB-A-2 016 630 (WAVIN B.V.)<br>* Page 4, lignes 52-63; fig. 8 *<br>--- | 1 | |
| A | US-A-3 315 970 (HOLLOWAY)<br>* Fig. *<br>----- | 1 | |

DOMAINES TECHNIQUES
RECHERCHES (Int. Cl.5)

F 16 L

Le présent rapport a été établi pour toutes les revendications

| Lieu de la recherche | Date d'achèvement de la recherche | Examinateur |
|---|---|---|
| LA HAYE | 28-03-1990 | HUBEAU M.G. |